# EUROPEAN PATENT SPECIFICATION

(11) **EP 0 450 638 B1**
(45) Date of publication and mention of the grant of the patent: **12.06.1996**
(21) Application number: 91105389.0
(22) Date of filing: 05.04.1991
(51) Int. Cl.: C03C 25/02, D21H 13/40

(54) **Chemical composition to produce water soluble curable films on fibrous surfaces and so treated glass fibers**
Chemische Zusammensetzung für die Herstellung von wasserlöslichen vernetzbaren Filmen auf Faseroberflächen und so behandelte Glasfasern
Composition chimique pour la production de films réticulables solubles en eau sur des surfaces fibreuses et fibres traitées

(30) Priority: 05.04.1990 US 505309
(43) Date of publication of application: 09.10.1991
(73) Proprietor: PPG INDUSTRIES, INC., Pittsburgh Pennsylvania 15272 (US)
(72) Inventor: Parrinello, Luciano Michael, Allison Park, Pa. 15101 (US)
(74) Representative: Sternagel, Hans-Günther, Dr.

(56) References cited:
- EP-A- 0 170 981
- US-A- 4 235 764
- US-A- 4 810 576

## Description

The present invention is directed to a chemical composition to produce a water soluble, but curable, film on the surfaces of fibers like glass fibers to yield treated fibers having good processability into chopped fibers and facile dispersibility in aqueous wet-laid pulping solutions, and producibility into glass fiber-containing paper having good strength properties.

The production of glass fibers from molten glass involves attenuating fibers from small orifices in a bushing in a glass melting furnace. The glass fibers usually are attenuated by a mechanical means and are usually gathered into one or more strands and are either collected as continuous strands on a winder or are chopped and collected as wet chopped glass fiber strands. During the attenuation and before the numerous glass fibers are gathered into one or more strands, a chemical treating composition, which is known as a sizing composition, is applied to each of the glass fibers. The aqueous sizing composition is necessary to provide protection to the glass fibers from interfilament abrasion, especially when the fibers are gathered together as strands. Also the sizing composition can be used to promote compatibility between the glass fibers and any matrix in which the glass fibers are to be used in for reinforcement purposes. The collected continuous strands or chopped strands can be dried, or wet chopped strands can be dried and packaged or they can be packaged in their wet condition. The dried continuous glass fiber strands can be chopped or combined with other glass fiber strands to form rovings, or produced into continuous strand mats or woven. Such steps depend upon the ultimate use for the glass fibers.

Glass fibers have been used the production of paper-like sheet materials and as chopped, continuous fibers, and strands and mats and fabrics for reinforcing polymers. Preparing chopped strand with a plurality of fibers involves chopping the strand with an attempt to chop each and every fiber in the strand. Chopped and continuous glass fibers have been used as a supplemental fibers in specialty, synthetic, fiberboard, pulp and composite papers. Also, the glass fibers are finding a use in glass fiber paper which is a substitute for papers made of asbestos fiber. Also, in recent years, a nonwoven, sheet-like mat of chopped glass fibers and/or strands has been utilized increasingly as a replacement for organic felts such as cellulose mats in roofing shingles and built-up roofing systems (BUR systems). These sheet-like mats are usually produced in a process where chopped fibers, or chopped fiber strands are dispersed in an aqueous solution and formed into a nonwoven mat of chopped glass fibers and/or strands. A nonwoven, sheet-like mat product is produced by contacting the mat of glass fibers with a polymeric binder. An example of a process to produce such a mat is the "wet-laid" process.

The wet-laid process involves forming an aqueous dispersion of chopped fibers or chopped strands usually with agitation in a mixing tank. The aqueous dispersion, usually referred to as slush or pulping medium, is processed into the wet-laid, sheet-like mat by such machines as cylinder or Fourdrinier machines or more technologically advanced machinery, such as the Stevens Former, Roto Former, Inver Former and the VertiFormer machines. The slush is deposited from a head box onto a moving wire screen or onto the surface of a moving wire-covered cylinder. The slurry on the screen or cylinder is processed into the nonwoven, sheet-like mat by the removal of water, usually by a suction and/or vacuum device, and by the application of a polymeric binder. Water and excess binder are removed by suction and/or vacuum devices. The binder impregnated nonwoven, sheet-like glass fiber mat is dried and cured in one or more ovens.

A recent variation of the wet-laid process utilizes an aqueous foam as the aqueous dispersion to produce the slush rather than a traditional white water. The foam also contains particles of thermoplastic polymer in addition to the glass fibers, one or more surfactants and water. This process is more fully discussed in U S-A-4,882,114; 4,670,331; 4,690,860; and British patent documents 1,129,757 and 1,329,409.

The strength of the nonwoven, sheet-like mat of glass fibers must be sufficient to withstand the processing steps and speeds to produce the nonwoven, sheet-like mat for application in various end uses. In addition, the finish on the glass fibers and the strength of the sheet-like mat must be sufficient to permit the fibers and mat to be stored in any desirable form, possibly for an extended period of time without loss of its cohesive properties and with only minimal if any curing of any sizing components on the glass. Also, the finish on the glass fibers in the sheet-like mat should enable the stored mat to be processed into end use applications without cracking or without the production of large amounts of static being generated during use. The efficient processability of the nonwoven, sheet-like mat into various end use applications depends on the strength properties of the sheet-like mat and also the structure and homogeneity or uniformity of the arrangement of the glass fibers in the mat itself.

The uniformity of the arrangement of chopped glass fibers and/or strands in the nonwoven, sheet-like mat of chopped glass fibers and/or strands contributes to the strength of the mat and of the ultimate end use product. One problem that exists in preparing a uniform mat of chopped glass fibers and/or strands from an aqueous dispersion is that glass fibers are not easily dispersed in aqueous media. This difficulty in dispersing the glass fibers occurs initially upon adding the glass fibers to water. The dispersibility is further complicated by the tendency of the glass fibers that are scattered somewhat in the aqueous medium, to reagglomerate to some degree. The reagglomerated glass fibers are very difficult to redisperse. The lack of a good dispersion of the glass fibers in the aqueous medium hampers the formation of a uniform mat, and adversely affects the strengths of the resultant sheet-like mat or end product incorporating the mat.

To resolve these problems various chemical treatments have been applied to the fibers or to the slush. A complicating factor is that with the addition of these various treatments the fibers used with the foam-type dispersion in the wet-laid process tend to result in less uniform mat production and lover physical properties in the resulting product.

US-A-4,810,576 discloses chemically treated glass fibers that have a good dispersibility in water and that are useful in forming non-woven sheet-like mats. The aqueous treating composition comprises a water soluble ungelled film-forming polymer, particularly a polyoxyethylene polymer, cationic lubricants, an aldehyde-condensate-reactable polymer, and a silane coupling agent. A polyvinylalcohol can also be present in a film forming amount.

It is an object of the present invention to provide chemical composition for treating fibers to provide adequate protection from interfilament abrasion, good choppability in processing, good dispersibility and good retention of the chemical composition in the aqueous medium, and that lead to the formation of more uniform sheet-like mat of chopped glass fibers and/or strands having good strength properties in a foam wet-laid mat production process.

It is a further object of the present invention to have chemically treated glass fibers useful in producing nonwoven, sheet-like mats having one or more polymeric binders having good strength properties, and good uniform distribution of the fibers in the mat and allow for good processability of the mats themselves in a foam wet-laid process.

### SUMMARY OF THE INVENTION

Accordingly, the foregoing objects and other objects gleaned from the following disclosure are accomplished by a chemical composition for producing chemically treated fibers having a curable film that is water soluble in its uncured state deposited on substantial portions of the surface of the one or more fibers wherein the composition comprises:
a) a water soluble film forming polymer selected from the group consisting of a poly(vinyl alcohol) and a poly(hydroxy alkyl cellulose), the poly(vinyl alcohol) being selected from the group consisting of a poly(vinyl alcohol) having a weight average molecular weight from 25,000 to 35,000, a poly(vinyl alcohol) having a number average molecular weight of 77,000 to 79,000 and a poly(vinyl alcohol) having a weight average molecular weight of up to 30,000, the film forming polymer having an intrinsic viscosity of less than 150 centipoise and being present in an effective film forming amount;
b) an organo-functional trialkoxy silane that is hydrolyzed, partially hydrolyzed or unhydrolyzed and mixtures thereof, wherein the organo functionality is resin compatible and essentially free of primary amine mono-organo functionality and wherein the silane in all of its forms is 0.4 to 20 weight percent of the solids of the composition;
c) a cationic fiber lubricant in an amount of 0.1 to 15 weight percent of the solids of the composition;
d) an epichlorohydrin polyamine reaction product present in an amount of 0.4 to 15 weight percent of the solids of the chemical composition; and
e) water present in an amount to give the composition a total solids of 1 to 25 weight percent and viscosity of 0.6 to 150 centipoise for application of the composition to fibers and wherein the composition is essentially free of : a) acrylic flocculating agents, b) latex-based polymeric film forming polymers that produce on evaporation or reaction at ambient temperatures the curing of the film on the fibers to a water insoluble film, and c) poly(oxyethylene) homopolymers.

Accordingly, the present invention is an aqueous chemical composition useful in treating fibers such as inorganic oxide fibers like glass fibers. The composition has at least one water-soluble, film forming polymer that has an intrinsic viscosity of less than 150 centipoise, a matrix resin compatible organo-functional trialkoxy silane, wherein the organic moiety is essentially devoid of primary monoamine functionality and can be hydrolysed or unhydrolyzed. The film forming polymer is selected from the group consisting of a poly(vinyl alcohol) and a poly(hydroxy alkyl cellulose), the poly(vinyl alcohol) being selected from the group consisting of a poly(vinyl alcohol) having a weight average molecular weight from 25,000 to 35,000, a poly(vinyl alcohol) having a number average molecular weight of 77,000 to 79,000 and a poly(vinyl alcohol) having a weight average molecular weight of up to 30,000. Also the composition has a water soluble, dispersible, and/or emulsifiable cationic lubricant; and one or more cationic epichlorohydrin polyamide adducts. Water is also present in the composition in an effective amount to allow for the viscosity of the aqueous chemical treating composition 0.6 to 150 centipoise. The amounts of the components other than water can vary within ranges based on the weight percent of the solids or nonaqueous components of the chemical composition. The ranges of amounts in weight percent are: for the film forming polymer or copolymer an effective film forming amount, for the organofunctional silane 0.4 to 20, for the cationic lubricant 0.1 to 15, and for the cationic amine polymer epichlorohydrin 0.4 to 15 so that it is not detrimental to the dispersiblilty of the treated fibers in water. In addition the composition is essentially free of an acrylic-containing flocculant polymer, any latex-based film forming polymer, and poly(oxyalkylene) homopolymers.

The application of the aqueous chemical treating composition to the glass fibers is by any known method such as spraying, dipping, application by rollers and the like. Accomplishing the determination of the viscosity is by any method known to those skilled in the art. For instance, the determination of the viscosity for at least 150 centipoise, preferably less for finer diameter fibers, is by a Brookfield viscometer with a number 1 spindle at an rpm of 30, but other equivalent determination methods are usable.

Another aspect of the present invention involves chemically treated fibers having a film or coating of the aqueous chemical composition or moisture-reduced residue of the aqueous chemical composition. The present invention relates to glass fibers having thereon the water content reduced residue of the afore-described aqueous chemical composition as an uncured water soluble film present in an amount based on LOI of 0.001 to 1.5 weight percent of the treated glass fibers. The treated fibers can be in any form such as continuous fiber strands or chopped fiber strands, which are produced as wet chopped or dry chopped fiber strands. When the chopped treated fiber strands are dispersed in aqueous media, the use of dispersing agents may not be needed in the aqueous media. However, if desired, these agents can be used since the treated glass fibers do not interfere with the function of the dispersing agents.

Another aspect of the present invention is a non-woven sheet-like glass fiber mat prepared from the above-described glass fibers.

The present invention further relates to a method for improving the dispersibility of fibers in an aqueous media, by (a) applying to substantial portions of the surface of one or more fibers the afore-described chemical composition resulting in one or more chemically treated fibers.

The present invention also relates to a method for forming a non-woven mat of chopped fibers by dispersing fibers treated with the afore-described chemical composition and having thereon the water content reduced residue of said composition in water, forming the non-woven mat by a wet-laid process, removing any excess of water and drying the mat.

### DETAILED DESCRIPTION OF THE INVENTION

The composition of the present invention can provide good protective properties for the fibers, when they are gathered into strands of continuous fiber strands, or then they are in the form of chopped fibers and/or strands. Hereinafter, in the specification and Claims, both fibers and strands will be referred to collectively as fibers. The fibers can be any fiber having a high modulus of elasticity; nonexclusive examples of such fibers include: glass, carbon, and ceramic fibers and fibers such as the aramid fibers sold under the trade manes Kevlar and Nomex. This will generally include any fiber having a modulus higher than 10,000 mega pascals. The chopped treated fibers of the present invention can be dispersed in aqueous media or white water systems to result in good dispersibility even in the absence of a dispersing agent. Chopped fibers with the chemical composition of the present invention are particularly suited for use with a wet-laid process that uses a foamed white water pulping medium or slush. An example of such a medium is the foamed medium having dispersed thermoplastic particles, such as that disclosed in U S -A- 4,882,114; 4,670,331; 4,690,860; and British patent documents 1,129,757 and 1,329,409. In making and using a nonwoven, sheet-like mat of the fibers, good strength properties are required for the processability of the mat into end use products such as fiber reinforced thermoplastic material that is stampable or moldable, and shingles and other roofing products or flooring products. Certain necessary properties for these ultimate products include one or more of the following: good tear strength, good flexibility and good wet, dry and hot-wet tensile strengths. So these properties of the ultimate products must be maintained, while achieving good strength properties of the nonwoven sheet-like mat having the thermoplastic polymer and binder.

It has been discovered that a majority, if not all, of these properties can have good values with the use of the fibers, and preferably glass fibers treated with or having a coating of the aqueous chemical composition of the present invention. The achievement of obtaining good properties in these areas is effected by the influence of the chemical components making up the chemical composition on the fibers, the interrelationship between the chemical composition and the surface of the fibers, and the interrelationship between the treatment on the fiber surface and the polymeric binder and thermoplastic polymer used to make the nonwoven sheet-like mat.

In the specification and in the claims, the below defined terms have the following meanings.

The "effective film forming molecular weight" of the water-soluble, poly(vinylalcohol) is that molecular weight that enables the polymer by itself to form a solid or liquid, coalesced and integrated film, that maintains the form as an integral and at least near continuous film on curved surfaces such as fibers.

The "white water system" is an aqueous solution in which the glass fibers are dispersed and which can contain numerous dispersants, thickeners, softening, hardening chemicals, or dispersed or emulsified thermoplastic polymers. Examples of various white water systems include aqueous solutions having polyacrylamide polymers such as the Separan polymer available from Dow Chemical Company, alone or with hydroxyethyl cellulose and the like suspending aids to provide a highly viscous aqueous solution at high material concentrations. Also, white water systems include those having any of the numerous amine oxide surfactants as shown in U S-A-4,179,331. An example of the polyacrylamides are those shown in U S-A-4,395,306. In addition to such chemicals as polyacrylamides or amine oxides being present in the white water system, there can also be present small amounts of surfactants such as polyethoxylated derivatives of amide condensation products of fatty acids and polyethylene polyamines as is shown in U S-A- 4,265,704. Also numerous other chemical agents can be added to a white water system as is known by those skilled in the art.

The water soluble, film forming polymer is present in the aqueous chemical composition to form a coating or film on the fiber with a reduction in the amount of moisture of the aqueous chemical composition after it is applied to the fibers. Also, it is preferred that the polymer is capable of forming a film at a temperature below ambient temperature. This characteristic is determined by the test for "Minimum Film Formation Temperature of Emulsion Vehicles" which is the test from the American Society of Testing Materials (ASTM) No. 2358-68. In addition the water soluble polymer is one that remains water soluble at least until cross-linked to some degree with the epichlorohydrin polyamide adduct at elevated temperatures. The polymer should not form a cured film or coating just on air drying of the composition on the surfaces of the fibers. Suitable polymers include poly(vinyl alcohol) and poly(hydroxyalkylcellulose) like poly(hydroxypropylcellulose and copolymers of these and monomers used to make these polymers. The preferred film former is poly(vinyl alcohol), and it can be prepared by any method known to those skilled in the polyvinyl alcohol technology and art. The poly(vinyl alcohol) has an effective film forming molecular weight and may have a low, medium, or high molecular weight. The poly(vinyl alcohol) can be fully or partially hydrolyzed from poly(vinyl acetate) to a sufficient degree to be water soluble, which is generally at least 50 percent hydrolyzation. Also, mixtures of various molecular weight and hydrolyzed poly(vinyl alcohols) can be used. The poly(vinyl alcohol) can be formed from poly(vinyl acetate) by hydrolysis or ester interchange reactions, and such a starting material is polymerized in a manner known to those skilled in the art to approach the desired molecular weight of the poly(vinyl alcohol). The poly(vinyl acetate) used as a starting material to produce the poly(vinyl alcohol) should not be one that results in a poly(vinyl alcohol) having a high degree of crystallinity. With the increasing degrees of crystallinity, the poly(vinyl alcohol) becomes less water soluble and preferably the poly(vinyl alcohol) is water-soluble.

The solid poly(vinyl alcohol) with a percent of hydrolysis in the range of 87 to 89 percent and with not too high a degree of polymerization, will be easily soluble in water. For the poly(vinyl alcohol) having a higher degree of polymerization or a higher percentage of hydrolysis, the polymer can be prepared into an aqueous emulsion or dispersion by any techniques known to those skilled in the art. For example, a fully hydrolyzed poly(vinyl alcohol) that is one having 98 to 98.8 percent hydrolyzation is soluble only in hot to boiling water. If the fully hydrolyzed poly(vinyl alcohol) is to be combined with water at room temperature, an emulsion or dispersion of the polymer will have to be used. In forming an oil-in-water emulsion of the poly(vinyl alcohol), such solvents as acetone or normal propanol are useful in improving water stability. When the partially hydrolyzed poly(vinyl acetate) is used, the water solution of the poly(vinyl alcohol) can be prepared at room temperature and need not be in the form of an emulsion or dispersion, unless higher amounts of poly(vinyl alcohol) are to be present in the solution and water would be a minor component. Generally, the poly(vinyl alcohol) will not dissolve in cold water, but it can be dissolved in warm or hot water and cooled with agitation so it does not precipitate. The presence of some residual acetate groups on the poly(vinyl alcohol), like those present where the degree of hydrolysis is 87-89 percent, renders the poly(vinyl alcohol) more soluble in water. But with further increasing of the number of acetate groups on the poly(vinyl alcohol), the solubility in water decreases for the much less hydrolyzed polymer. For example, poly(vinyl alcohol) with 30 mole percent acetate (50 percent hydrolyzed) is soluble only in a water-alcohol mixture.

A nonexclusive example of a useful poly(vinyl alcohol) is a low molecular weight poly(vinyl alcohol) having a weight average molecular weight from 25,000 to 35,000 with 1 percent residual acetate groups and less than 5 percent methyl methacrylate comonomer present to flexibilize the polymer. An example of a commercially available poly(vinyl alcohol) that can be used is Elvanol T-66 poly(vinyl alcohol) for the low molecular weight type which is available from E. I. duPont de Nemours Co. A medium molecular weight type of poly(vinyl alcohol) that is 87-89 percent hydrolyzed is Vinol WS 53 or 523 material, which is available from Air Products and Chemicals, Inc. This material has 11 to 13 percent residual acetate moieties and a molecular weight in the range of 77,000 to 79,000 number average molecular weight, (Mn). Another useful poly(vinyl alcohol) is the Vinol WS-51 or 205 material from Air Products Co. This material has a molecular weight of up to 30,000 weight average molecular weight, (Mw), and a residual acetate level of 11 to 13 percent.

Nonexclusive examples of poly(vinyl alcohol) copolymers that can be used include copolymers with vinyl acetate, unsaturated aliphatic dicarboxylic acid, dialkyl esters, acrylic acid alkyl esters and vinyl alkyl ethers, crotonic acid and olefin comonomers, maleic acid monoalkyl ester, lactone rings, methyl methacrylate and the like.

The vinyl esters that are useful for hydrolyzation into the poly(vinyl alcohol) polymer include: vinyl acetate, vinyl propionate, vinyl formate, etc., although vinyl acetate is normally employed. Also, the poly(vinyl alcohol) resin can be produced from itaconic acid which is substantially free of its ester and anhydride forms on the one hand, and vinyl acetate as a typical species of vinyl ester on the other hand through free radical polymerization in an alcoholic solvent. These polymers are hydrolyzed under acid or alkaline conditions. Alkaline conditions are created by the use of an aqueous solution of alkali metal hydroxide and alcoholysis with a basic catalyst. Also useful is the commercial methanolysis approach with the use of sodium methoxide or sodium hydroxide. Acid hydrolysis is not preferred since resulting carboxyl groups and side chains are liable to form lactone rings (intramolecular esters) which can interfere with the solubility of the poly(vinyl alcohol) resin.

In addition, the aqueous chemical composition has present one or more water soluble, dispersible, and/or emulsifiable cationic polyamide polymer and epichlorohydrin adducts. It is believed without limiting the scope of the invention that these polymeric agents are those that are capable of providing a curing mechanism for composition on the treated fibers when they are heated at elevated temperatures. The elevated temperatures would be those above atmospheric ambient temperatures in temperate zones. It is further believed that the curing results from a certain degree of cross-linking with a film forming polymer like poly(vinylalcohol) and interaction bonding with the binder-reactable coupling agent and the binder for the nonwoven sheet-like mat. Typical binders are poly(vinylalcohol), poly(vinylacetate), carboxymethyl cellulose, starch, urea formaldehyde, melamine formaldehyde, phenol formaldehyde, epichlorohydrin and amino resins and anionic or cationic modified versions thereof and mixtures of the various resins. Some of these resinous materials may have some unreacted formaldehyde or aldehyde donor or methylene donor like paraformaldehyde hexamethylene tetramine and the like and methylol groups like N-methylol groups in urea formaldehyde. The adduct can react with the excess aldehyde or methylene donor or formaldehyde and the methylol groups. These reactions are those such as formation of methylene linkages or methylene and ether linkages through bimolecular reactions and/or methyleneurea formation and polymerization reactions.

The polyamide-epichlorohydrin adducts can have a polyamide backbone structure with the epichlorohydrin functionality associated with an amine group in the polymer. These adducts can be produced by any method known to those skilled in the art. One such method includes the reaction of any polycarboxylic acid, such as succinic acid, maleic acid, terephthalic acid or adipic with polyalkylene polyamine. The resultant long chain polyamide is reacted with epichlorohydrin. The amounts of these materials reacted to produce the adducts is such to yield 0.9 to 1.5 moles of epichlorohydrin equivalent of the polyamide. The adduct can have a repeating unit structure similar to the following: 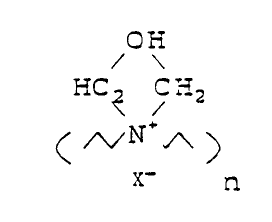
In the above structure "x" can be chloride ion or any other halogen ion and "n" is an integer representing the number of repeating units in a polymer chain which is a particular value for the Mn of the polymer and the ratio of the moles of the epichlorohydrin functionality to the polyamide functionality. A nonexclusive example of a suitable epichlorohydrin polyamide resin adduct which can be used is that available from Georgia Pacific Company, Resin Division, Atlanta, Georgia under the trade designation GP2925. This polyamide is an amber colored liquid having a percent solids of 20 to 20.5, a viscosity in centistokes of 140 to 200, a specific gravity of 1.04 to 1.05, a weight per ℓ in kg of 1.04 (per gallon in pounds of 8.7), a pH at 25°C of 6.9 to 7.3, a boiling point of 100°C, a flash point of none to boiling and a storage life at 25°C of six months. In addition, the polyamide resin may contain a trace of free epichlorohydrin. Another such resin adduct that is suitable is the Polycup 1884, 2002, and/or 172 resin adducts. These materials have total solids by weight percent ranging from 35 to 12.5 and specific gravities at 25 degrees Centigrade from 1.12 to 1.03. The amount of the epichlorohydrin in the aqueous chemical composition ranges from around 0.4 weight percent of the nonaqueous solids of the chemical composition up to 15 weight percent so that it does not result in a poorer dispersion of the fibers in the foamed slush or pulping medium. Generally, an amount of the adduct in the composition up to this upper limit improves the strength properties of the nonwoven sheet-like material.

The aqueous chemical treating composition also has present a resin compatible organo silane coupling agent where compatibility is with the thermoplastic polymer particles in a foamed pulping medium. This polymer eventually after processing becomes the thermoplastic polymer of the fiber reinforced stampable sheet. The silane can be selected from the following: polyamino organo silanes, mercapto functional organo silanes and ureido-functional organo silanes, and/or vinyl-containing silanes such as vinyltriethoxysilane. These organo silane coupling agents can be in unhydrolyzed or partially or fully hydrolyzed. The amount of the organo functional silane generally ranges from 0.5 to 20 and preferably from 0.5 to 10 weight percent of the nonaqueous components or solids of the composition.

The organo moiety of these organo functional silane coupling agents is a difunctional organic radical selected from the lower alkyl or aliphatic hydrocarbons having less than 8 carbon atoms. The organic group bonded with the oxygen in the organo functional silane coupling agent can be the same or different organic moieties selected from lower alkyl or aliphatic hydrocarbons having less than 8 and preferably less than 5 carbon atoms. Nonexclusive examples of the organo silane coupling agent include: ethoxylated gamma aminopropyltriethoxy silane such as that available commercially from Union Carbide Corporation under the trade designation A-1108, the polyamino organo functional silane coupling agent such as N-beta(aminoethyl) gamma aminopropyltrimethoxy silane (A-1120), the material available from Union Carbide (A-1130), which is a polyamino organo silane coupling agent, the ureido silane having the structure H₂NCONHC₃H₆Si(OC₂H₅)₃, 50 percent in methanol, available under the trade designation A-1160, and vinyl silanes such as vinyltrioxysilane available from Union Carbide Corporation under the trade designation A-151. The presence of other types of organo silane coupling agents is not needed, since one or more of the aforementioned organo functional silane coupling agents gives adequate performance. Although a silane like bis-trimethoxysilylethane available as 7169-13 can be combined with a ureido-functional silane. The addition of further different types of organo silane coupling agents provide little extra benefit. The organosilane is essentially devoid of a single or mono primary amine organic functionality or moiety.

The chemical composition of the present invention has one or more water soluble, dispersible or emulsifiable cationic lubricant surfactants. These lubricants can have one or more primary, secondary and/or tertiary amine moieties or can be alkyl imidazoline reaction products of a tetraethylene pentamine and stearic acid. Nonexclusive examples of the cationic lubricating surfactants include: aliphatic mono, di, and polyamines like N-alkyl trimethylenediamine, 2-alkyl-2-imidazoline or 1-(2-aminoethyl)-2-alkyl-2-imidazoline, where, respectively, the alkyl groups can be those such as soya alkyl, tallow alkyl, coco alkyl or 9-octa-decyl or mixtures of alkyls, heptadecenyl, undecyl or heptadecyl, nonyl or mixtures of alkyls, where these compounds are water soluble, dispersible or emulsifiable. Also compounds can be used that are like: amine oxides, polyoxyalkylene alkylamines, 1-(2-hydroxyalkyl)-2-alkyl-2-imidazolines, 2-hydroxylalkyl-2-imidazoline, or N,N,N',-tetrakis-substituted alkylene diamine derivatives or rosin derived amines, where the alkyl groups can be like cetyl, lauryl, myristyl, stearyl, coco, hydrogenated tallow, hexadecyl, tallow octadecyl, alkyl groups for polyoxyalkylene, aliphatic and resin monoamines, where the alkylene is ethylene or an equivalent alkyl groups with from about 8 to about 22 carbon atoms, soybean oil and soya. Other useful cationic surfactants include polyoxyethylene alkyl and alicyclic amines, where any of the aforelisted alkyl groups and any of the known alicyclic groups can be used. These cationic materials are more fully described in the "Encyclopedia of Chemical Technology", Kirk and Othmer, Vol. 19, pages 554-563, The Interscience Encyclopedia, Inc., N.Y. These cationic materials include those like polyoxyethylene linear alkyl amines, and polyoxyethylene dihydroabietyl amines. Also useful are the condensation reaction products of carboxylic acids, fatty acids with di or polyamines or dialkylene or polyalkylene amines and polyalkoxylated derivatives thereof. A particularly useful class of cationic surfactants are the lubricant cationic surfactants that are alkyl imidazoline derivatives, which includes compounds of the class, n-alkyl-N-amido-alkyl imidazolines, which may be formed by causing fatty acids or carboxylic acids to react with polyalkylene polyamines under conditions which produce ring closure. The reaction of tetraethylene pentamine with stearic acid is exemplary of such a reaction. These imidazolines are described more fully in U S-A-2,200,815 and other imidazolines are described in U S-A-2,267,965; 2,268,273; and 2,353,837. The most useful cationic lubricating surfactant is that available under the brand name Cation-X softener from Lyndal Chemical Co., Lyndhurst, NJ.

The amount of the cationic surfactant in the treating composition is generally in the range of 0.1 to 15 weight percent of the solids of the aqueous chemical composition. The amount of the cationic lubricant will vary in this range depending on the number and type of cationic groups present in the cationic surfactant and the type of cationic epichlorohydrin-polyamide adduct. Preferably, the amount of cationic lubricating surfactant is lower in the aforementioned range when the adduct has a higher cationic nature, and, conversely, when the cationic nature is lower for the adduct the amount of the cationic lubricant is higher in the range.

In addition to the foregoing chemical compounds, the chemical composition of the present invention may have numerous other chemical compounds, which are known to be useful in aqueous treating compositions for treating glass fibers to be dispersed in aqueous media. The chemical composition is essentially devoid of the monoamino organofunctional silanes since this material tends to oligomerize more rapidly in water than other silane coupling agents. Additionally the chemical composition is essentially devoid of an acrylic-containing flocculent polymers- like medium-high cationic polymer or copolymer having a quaternized amine function, e.g., a polymer or copolymer that is of at least 40 percent of an acrylic functional monomer also having an amine function like a poly( acrylic-acrylamide). These materials actually decrease the physical properties of the nonwoven mat structure having the thermoplastic polymer particles. In addition the chemical composition is essentially devoid of a latex-based film forming polymers. These materials could lead to the formation of hydrophobic films on the glass fibers rather than a curable water-soluble coating that is heat curable into a film on the fibers. Also the composition is essentially devoid of poly(oxyethylene) homopolymer.

Also present in the chemical composition of the present invention is a water as a liquid carrier to make the chemical composition an aqueous chemical composition. The amount of water present in the aqueous chemical composition is that amount necessary to give the chemical composition a total solids content within a level, whereby the viscosity of the aqueous chemical composition is effective for application to glass filaments, that is, a composition with a viscosity of 0.6 to 150 centipoise at 60°C or less, although higher viscosities are possible with proper pumping equipment. The amount of water present in the aqueous chemical composition is sufficient to give a total solids (nonaqueous) content of the aqueous chemical composition in the range of 1 to 25 percent by weight and preferably 2 to 10 percent by weight of the aqueous chemical composition.

The chemical composition of the present invention can be prepared by any method and with any equipment known to those skilled in the art for preparing aqueous chemical compositions to be applied to glass fibers. For instance, the chemical compounds can be added sequentially or simultaneously to water or in any order whatsoever.

The aqueous chemical composition can be applied to any of the glass fibers by any method known to those skilled in the art. For instance, the glass fibers can be prepared by mechanical attenuation or the like from batch compositions known as "E" glass or "621" glass or any more environmentally acceptable derivatives thereof, and other types of glasses such as "A" glass, "C" glass, or "S" glass via direct or indirect melting operations. In preparing strands of glass fibers, the filament diameter of the glass fibers making up the strands can vary from around 3 µm to around 20 µm or higher and preferably around 9 to around 18 µm. The aqueous chemical composition can be applied to the glass fibers after they are formed and during their attenuation by any type of applicator such as belt applicators, roll applicators or any applicator which enables the liquid to contact the glass fibers. The amount of the aqueous chemical composition applied to the glass fibers should be sufficient to give at least a partial or intermittent coating or covering or application of the chemical composition on the treated glass fiber strand or around 0.01 to about 5 weight percent of the treated glass fiber strand. The treated glass fibers can be chopped directly as fibers or gathered into one or more glass fiber strands and chopped, where the fibers or strands are chopped during the process of forming the glass fibers after the chemical composition has been applied to them. The chopped lengths vary from 1.59 mm (1/16 of an inch) to 76.2 mm (3 inches) and more particularly 12.7 mm (1/2 inch) to 25.4 mm (1 inch). Such a process is commonly referred to in the art as the wet chop process. The amount of the moisture on the wet-chopped glass fiber is usually in the range of up to 20 weight percent of the treated fibers and preferably up to 15 weight percent and most preferably between 9 and 15 weight percent. Also the glass fibers can be treated and gathered into strands much like the wet chop process, but the fibers are collected as continuous glass fiber strands into a forming package and subsequently chopped in a remote wet chop process or after drying in a dry chop process into lengths similar to those of the direct wet chop process.

The aqueous dispersion of the treated glass fibers can be achieved merely by placing the wet or dry chopped glass fibers of the desired length into a batch of water with or without dispersing aids usually with agitation and/or turbulence to form a dispersion of glass fibers for use in the wet-laid process or other paper making processes. Also the glass fiber strands can be placed in a foamed slush or pulping medium. The foam also can contain particles of thermoplastic polymer in addition to the glass fibers, one or more surfactants and water. This process is more fully discussed in U S-A-4,882,114; 4,670,331; 4,690,860; and British patent documents 1,129,757 and 1,329,409. The amount of the chopped treated glass fibers in the aqueous dispersion can range from 0.001 to 5 but preferably 0.01 to 3 weight percent of the aqueous dispersion. Although the treated glass fibers of the present invention can be used without dispersion aids, any of the conventional dispersion aids can be used with the chopped, treated glass fibers of the present invention. Also the nonwoven, sheet-like mat of treated chopped glass fibers can be made by any method and with any apparatus known to those skilled in the art.

The nonwoven, sheet-like glass fiber mat of the present invention is suitable for use as a moldable or stampable fiber reinforced thermoplastic sheet and also the strands with the sized glass fibers strand be used in preparing products for replacement for felt in shingles and also for use in built-up roofing (BUR) systems ad for use as backing materials and base materials in flooring applications. The nonwoven sheet-like mat itself requires good strength properties for handling to be processed into the moldable thermoplastic fiber reinforced sheet. These strength properties are measured by dry tensile, wet tensile, hot-wet tensile and tear strength of the mat with the polymeric binder. A good mat and binder product must have adequate tensile strength and adequate tear strength and wet strength. The nonwoven, sheet-like mat, binder and thermoplastic polymer product of the present invention has these adequate properties and even further improved values for some of these properties as is shown in the examples of the present invention.

### PREFERRED EMBODIMENT OF THE INVENTION

The preferred fibers are glass fibers of an E-glass or 621-type glass composition. The aqueous chemical composition preferably has a water soluble poly(vinylalcohol) that is the Vinol 205 material. Also the one cationic lubricant surfactant present is the fatty imidazoline derivative formed as the reaction product of tetraethylene pentamine or mixtures containing the same and stearic acid, which also may have enough dextrin to prevent syneresis. The organo functional silane has an organic moiety with functionality that is compatible with the type of thermoplastic polymer that is the thermoplastic particles of the foam pulping medium. The epichlorohydrin-polyamide adduct also varies slightly for the type of thermoplastic polymer present as particles that become the polymeric matrix for fiber reinforced stampable thermoplastic sheet.

Water is also present in the composition in an effective amount to allow for the viscosity of the aqueous chemical treating composition of preferably around 5 centipoise or more. The amounts of the components other than water can vary within ranges based on the weight percent of the solids or nonaqueous components of the chemical composition. Preferably the ranges of amounts in weight percent are: 80 to 98 for poly(vinylalcohol) polymer or copolymer, 1 to 10 of the organofunctional silane, 0.5 to 10 for the cationic lubricant, and 1 to 15 for the cationic amine polymer epichlorohydrin. In addition the composition is essentially free of an acrylic-containing flocculant polymer and any latex-based film forming polymer. The silane is not one having a single primary amine for the organic functionality. The ureido-functional silane is preferably used where the thermoplastic polymer in the foam slush is a poly(amide), polyester, polycarbonates, or polyphenylene oxide polymer. The vinyl-containing silane is preferably used when the thermoplastic polymer is polypropylene or other similar addition polymers.

In preparing the aqueous chemical composition ordinarily water is deionized and used at ambient temperatures. An appropriate amount of water that is hot, having a temperature in the range of 60 to 71°C (140°F to 160°F), is added to a main mix tank. The amount of poly(vinyl alcohol) homopolymer, Vinyl 205, is added to the main mix tank. Ten percent of the total is added every 5 minutes with stirring so as not to introduce air for about 25 minutes after all of the poly(vinyl alcohol) is added which usually occurs within 60 minutes.

An amount of hot water is added to a premix tank followed by an amount of the Cat X cationic lubricant in one lump sum with stirring for around 15 minutes. An additional amount of water is added to the premix tank, where the amount is approximately equal to the first amount of water added to the premix tank. The diluted cationic lubricant is added to the main mix tank.

An amount of water is added to the premix tank and the compatible organo-functional silane is added to the premix tank all at once. If the silane is a vinyl silane, acetic acid is also added to the premix tank all at once before the addition of the vinyl silane. Once the silane is added, it is stirred for around 20 minutes and added to the main mix tank.

The epichlorohydrin-polyamide adduct is added to the main mix tank and the container is rinsed with a small amount of water and also added to the main mix tank. The chemical composition is then diluted to its final volume and adjusted to the target total solids.

The aqueous chemical composition is used to treat the- glass fibers preferably in a wet chop process, where the treated glass fibers are gathered into strands and chopped during the fiber formation and attenuation process. Preferably, the treated glass fibers are chopped into lengths ranging from 0.125 mm (1/8 inch) to a little over 25.4 mm (1 inch). The treated glass fiber strands have an amount of the treating composition ranging in an amount from 0.01 to 1.5 percent, most preferably 0.15 to 0.45 weight percent of the treated glass fiber strands.

The treated glass fiber strands are added to an aqueous foam dispersion also having thermoplastic polymer particles. The chopped glass fibers are added in a preferred amount of 0.1 to 1.0 weight percent The nonwoven sheet-like mat is formed and dried and cured in an oven after any excess moisture and/or binder is removed by vacuum or suction means to produce the nonwoven, sheet-like mat of the present invention.

Additional information and further illustrations of the embodiments of the aqueous chemical composition and treated glass fibers of the present invention are presented in the following examples, although these examples do not limit the scope of the invention to these specific embodiments.

### Examples 1-3

Three aqueous chemical compositions for treating glass fibers were prepared having in weight percent solids the following:

### Formulations

| Example | 1 | 2 | 3 |
|---|---|---|---|
| Poly(vinylalcohol) Vinol 205 | 77.5 | 68.0 | 66.0 |
| Cationic lubricant (Cat-X lubricant) | 7.04 | 13.2 | 12.8 |
| Ureido-modified aminosilane | 8.04 | 17.11 | 16.6 |
| Epichlorohydrin-polyamide adduct (GP 2935) | 7.4 | 1.6 | 1.5 |
| bis-trimethoxysilylethane (7169-13) | --- | --- | 3.0 |

These formulations were applied to glass fibers and the fibers were used in forming nonwoven sheet-like mat with various thermoplastic polymers including polypropylene, polyamide and generally other condensation type thermoplastic polymers like polycarbonates, polyesters, and polyphenyleneoxides and the like.

### Example 4

An aqueous chemical composition for treating glass fibers was prepared having in weight percent solids the following:

### Formulation

| | |
|---|---|
| Poly(vinylalcohol) Vinol 205 homopolymer | 88.6 |
| Cationic lubricant (Cat-X) | 0.54 |
| Epichlorohydrin-Polyamide adduct (Polycup 172 material | 6.68 |
| Vinylorganofunctional silane (A-151 silane) | 4.21 |
| acetic acid for hyrolyzing the silane | 0.43 |

The formulation of Example 1 was applied to glass fibers to give an LOI percent of 0.15 to 0.45. The strands of these fibers are chopped into lengths of around 12.7 mm (0.5 inch) and have a moisture content of 9 to 15 weight percent. A quantity of these chopped, chemically treated glass fiber strands were used to prepare a thermoplastic GTX nylon based fiber reinforced polymer composite that was 30 percent glass filled . A similar thermoplastic, fiber reinforced stampable sheet was prepared where the thermoplastic polymer was polyphenylene oxide and another was prepared where the thermoplastic polymer was polycarbonate. These fiber reinforced stampable polymers were molded and tested for physical properties, and the results are shown in Table 1. The tests were conducted in accordance with art recognized procedures such as the ASTM (American Society of Testing Materials) tests D-638, D-790, and D256.

The formulation of Example 1 was prepared into an aqueous chemical treating composition having a solids content of 2.4 to 2.8, a pH of 4.1 to 4.5, a viscosity of 3.6 to 4.0 at a temperature of 23.9 to 35°C (75 to 95°F), and was applied to glass fibers in a manner similar to that of the preferred embodiment.

The formulation of Example 4 was prepared into an aqueous chemical treating composition having a percent solids of 2.3 to 2.7, a pH of 3.4 to 3.8, a viscosity in centipoise of 2.60 to 2.90 at a temperature of 29.4°C (85°F) and applied to glass fibers in a manner similar to that of the preferred embodiment, where acetic acid is used to hydrolyze the vinyl silane. The aqueous chemical treating composition was applied to glass fibers so the chopped strands of treated glass fibers had a percent LOI of 0.15 to 0.45, a moisture content of 9 to 15 percent and a length of around 12.7 mm (0.5 inch). A fiber reinforced polymer where the thermoplastic polymer was polypropylene was prepared to have 30 percent of the fiber reinforced material as the chopped chemically treated glass fiber strands. The fiber reinforced thermoplastic was molded and the molded material was tested for physical properties which are given in Table 1.

### Comparative Example

Chemically treated glass fibers having a chemical treatment having a flocculating polymer were produced for comparative purposes to the chemical composition of the present invention. The formulation had in addition to water the following:

| Ingredient | Weight % Solids |
|---|---|
| polyvinylalcohol (Vinyl 205) | 43.8 |
| ureido functional silane (A-1160) | 15.0 |
| cationic lubricant (Cat X) | 16.5 |
| epichlorohydrin polyamine adduct (GP 2925) | 2.0 |
| flocculating polymer (Seperan 511) | 22.7 |

Three separate samples of 6.35 mm (1/4") chopped strand of glass fibers were prepared, where each had a different chemical treatment of either the comparative example or examples 2 or 3 . 6.35 mm (One quarter inch) chopped strand of Example 2, and 6.35 mm (1/4") chopped strand of the Comparative Example were used to reinforce polypropylene where the filament diameter of the glass was the same and the weight percent of glass in the fiber reinforced polypropylene was the same at 30 weight percent. The physical properties of the two are obtained and are shown in Table 1. Also, the 6.35 mm (1/4") chopped strand with the coating of the Comparative Example was compared to 6.35 mm (1/4") chopped strand made with the chemical composition of Example 3. The two types of chopped strand were used in making fiber reinforced polyphenylene oxide. The fibers had the same filament diameter, and the weight percent of glass was 37.6 weight percent for the glass fibers treated with the Comparative chemical composition, and 36.5 weight percent for the fibers treated with the chemical composition of Example 3. The physical properties of the polyphenylene oxide reinforced with these two types of chemically treated glass fibers are shown in Table 1. Both tensile and flexural properties are independent of the fiber length of the chopped strands. This is because the 6.35 mm (1/4 inch) length and the 16 µm diameter of the fibers result in an aspect ratio that is substantially higher than the critical aspect ratio required to provide reinforcement. Differences in these physical properties in Table 1 can be attributed solely to the differences in the chemical compositions on the fibers.

From Table 1 it is apparent that the presence of a flocculating agent in the comparative chemical composition on the glass fibers reinforcing two types of thermoplastic polymers, polypropylene and polyphenylene oxide, resulted in lower physical properties for the fiber reinforced polymer in tensile strength, flexural strength and flexural modulus. It is also apparent that the physical properties of molded fiber reinforced thermoplastic having chopped strands with the chemical composition of Examples 1 and 4 that didn't have the flocculent polymer have superior physical properties.

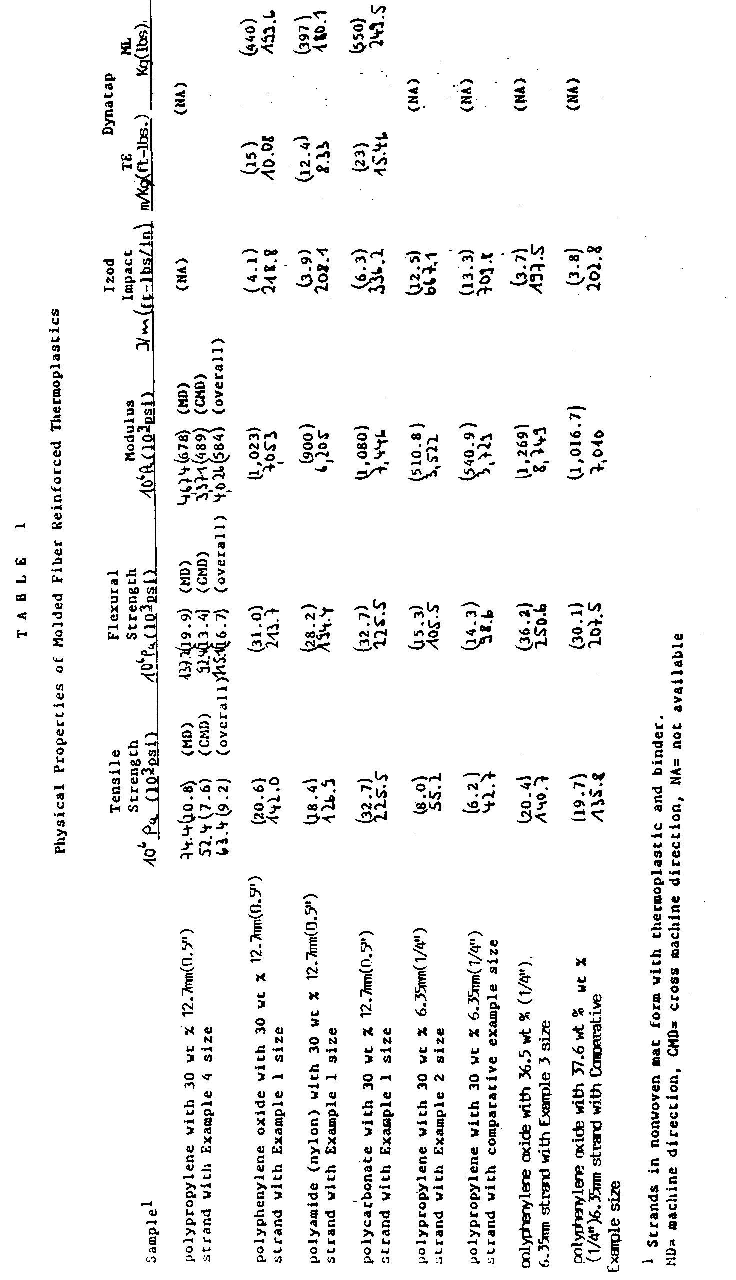

## Claims (Claims for the following Contracting State(s): BE, CH, DE, FR, GB, IT, LI, NL)

1. A chemical composition for producing chemically treated fibers having a curable film that is water soluble in its uncured state deposited on substantial portions of the surface of the one or more fibers wherein the composition comprises:
a) a water soluble film forming polymer selected from the group consisting of a poly(vinyl alcohol) and a poly(hydroxy alkyl cellulose), the poly(vinyl alcohol) being selected from the group consisting of a poly(vinyl alcohol) having a weight average molecular weight from 25,000 to 35,000, a poly(vinyl alcohol) having a number average molecular weight of 77,000 to 79,000 and a poly(vinyl alcohol) having a weight average molecular weight of up to 30,000, the film forming polymer having an intrinsic viscosity of less than 150 centipoise and being present in an effective film forming amount;
b) an organo-functional trialkoxy silane that is hydrolyzed, partially hydrolyzed or unhydrolyzed and mixtures thereof, wherein the organo functionality is resin compatible and essentially free of primary amine mono-organo functionality and wherein the silane in all of its forms is 0.4 to 20 weight percent of the solids of the composition;
c) a cationic fiber lubricant in an amount of 0.1 to 15 weight percent of the solids of the composition;
d) an epichlorohydrin polyamine reaction product present in an amount of 0.4 to 15 weight percent of the solids of the chemical composition; and
e) water present in an amount to give the composition a total solids of 1 to 25 weight percent and viscosity of 0.6 to 150 centipoise for application of the composition to fibers and wherein the composition is essentially free of : a) acrylic flocculating agents, b) latex-based polymeric film forming polymers that produce on evaporation or reaction at ambient temperatures the curing of the film on the fibers to a water insoluble film, and c) poly(oxyethylene) homopolymers.

2. The chemical composition of claim 1, wherein the film forming polymer (a) is present in an amount up to 98 weight percent of the non-aqueous solids of the chemical composition.

3. The chemical composition of claim 1, wherein the cationic lubricant (c) is selected from the group consisting of aliphatic alkyl-2-imidazoline; amine oxides; polyoxyalkylene alkylamines; 1-(2-hydroxyalkyl)-2-alkyl-2-imidazoline; 2-hydroxy-alkyl-2-imidazoline; alkyl imidazoline derivatives including compounds of the class n-alkyl-N-amidoalkyl imidazolines, which may be formed by causing fatty acids or carboxylic acids to react with polyalkylene polyamines under conditions that produce ring closure; N,N,N',N'-tetrakis-substituted ethylene diamine derivatives; rosin derived amines; polyoxyethylene alicyclic amines; polyoxyethylene dihydroabietyl amines; and reaction products of carboxylic or fatty acids with di or polyamines dialkylene or polyamines and polyalkoxylated derivatives thereof.

4. The chemical composition of claim 1, wherein the organo functional silane coupling agent (6) is selected from the group consisting of lubricated alkoxylated gamma-aminotrialkoxy silane, polyamino organo silane, mercapto functional organo silane, ureido functional organo silane, vinyl functional organo silane and mixtures thereof.

5. The chemical composition of claim 1, wherein water is present in an amount to give a viscosity of the composition in the range from 0.6 to 50 centipoise at 60°C or less.

6. The chemical compostions of claim 1, wherein the poly(vinyl alcohol) is hydrolyzed from vinyl esters selected from the group consisting of vinyl acetate, vinyl propionate and vinyl formate.

7. Glass fibers having thereon the water content reduced residue of an aqueous chemical composition of any of claims 1-6 as an uncured water soluble film present in an amount based on LOI of 0.001 to 1.5 weight percent of the treated glass fibers.

8. Glass fibers of claim 7, wherein fibers are chopped fibers having a length from 1.59 mm (1/16 inch) to 76.2 mm (3 inches).

9. A non-woven sheet-like glass fiber mat prepared from glass fibers according to claims 7 or 8.

10. A method for improving the dispersibility of fibers in an aqueous media, by (a) applying to substantial portions of the surface of one or more fibers a chemical composition of any of claims 1-6 resulting in one or more chemically treated fibers.

11. The method of claim 10, wherein the one or more fibers is (are) glass fiber(s).

12. The method of claim 10 or 11, wherein the chemical composition is applied by spraying.

13. The method of any of claims 10 to 12, wherein the treated fibers are dried.

14. A method for forming a non-woven mat of chopped fibers by dispersing fibers treated with a chemical composition of any of claims 1-6 and having thereon the water content reduced residue of said composition in water, forming the non-woven mat by a wet-laid process, removing any excess of water and drying the mat.

## Claims (Claims for the following Contracting State(s): ES)

1. Process for preparing a chemical composition for producing chemically treated fibers having a curable film that is water soluble in its uncured state deposited on substantial portions of the surface of the one or more fibers wherein the composition comprises:
a) a water soluble film forming polymer selected from the group consisting of a poly(vinyl alcohol) and a poly(hydroxy alkyl cellulose), the poly(vinyl alcohol) being selected from the group consisting of a poly(vinyl alcohol) having a weight average molecular weight from 25,000 to 35,000, a poly(vinyl alcohol) having a number average molecular weight of 77,000 to 79,000 and a poly(vinyl alcohol) having a weight average molecular weight of up to 30,000, the film forming polymer having an intrinsic viscosity of less than 150 centipoise and being present in an effective film forming amount;
b) an organo-functional trialkoxy silane that is hydrolyzed, partially hydrolyzed or unhydrolyzed and mixtures thereof, wherein the organo functionality is resin compatible and essentially free of primary amine mono-organo functionality and wherein the silane in all of its forms is 0.4 to 20 weight percent of the solids of the composition;
c) a cationic fiber lubricant in an amount of 0.1 to 15 weight percent of the solids of the composition;
d) an epichlorohydrin polyamine reaction product present in an amount of 0.4 to 15 weight percent of the solids of the chemical composition; and
e) water present in an amount to give the composition a total solids of 1 to 25 weight percent and viscosity of 0.6 to 150 centipoise for application of the composition to fibers and wherein the composition is essentially free of : a) acrylic flocculating agents, b) latex-based polymeric film forming polymers that produce on evaporation or reaction at ambient temperatures the curing of the film on the fibers to a water insoluble film, and c) poly(oxyethylene) homopolymers.

2. The process of claim 1, wherein the film forming polymer (a) is present in an amount up to 98 weight percent of the non-aqueous solids of the process composition.

3. The process of claim 1, wherein the cationic lubricant (c) is selected from the group consisting of aliphatic alkyl-2-imidazoline; amine oxides; polyoxyalkylene alkylamines; 1-(2-hydroxyalkyl)-2-alkyl-2imidazoline; 2hydroxy-alkyl-2-imidazoline; alkyl imidazoline derivatives including compounds of the class n-alkyl-N-amidoalkyl imidazolines, which may be formed by causing fatty acids or carboxylic acids to react with polyalkylene polyamines under conditions that produce ring closure; N,N,N',N'-tetrakis-substituted ethylene diamine derivatives; rosin derived amines; polyoxyethylene alicyclic amines; polyoxyethylene dihydroabietyl amines; and reaction products of carboxylic or fatty acids with di or polyamines dialkylene or polyamines and polyalkoxylated derivatives thereof.

4. The process of claim 1, wherein the organo functional silane coupling agent (6) is selected from the group consisting of lubricated alkoxylated gamma-aminotrialkoxy silane, polyamino organo silane, mercapto functional organo silane, ureido functional organo silane, vinyl functional organo silane and mixtures thereof.

5. The process of claim 1, wherein water is present in an amount to give a viscosity of the composition in the range from 0.6 to 50 centipoise at 60°C or less.

6. The process of claim 1, wherein the poly(vinyl alcohol) is hydrolyzed from vinyl esters selected from the group consisting of vinyl acetate, vinyl propionate and vinyl formate.

7. Glass fibers having thereon the water content reduced residue of an aqueous chemical composition prepared according to the process of any of claims 1-6 as an uncured water soluble film present in an amount based on LOI of 0.001 to 1.5 weight percent of the treated glass fibers.

8. Glass fibers of claim 7, wherein fibers are chopped fibers having a length from 1.59 mm (1/16 inch) to 76.2 mm (3 inches).

9. A non-woven sheet-like glass fiber mat prepared from glass fibers according to claims 7 or 8.

10. A method for improving the dispersibility of fibers in an aqueous media, by (a) applying to substantial portions of the surface of one or more fibers a chemical composition prepared according to the process of any of claims 1-6 resulting in one or more chemically treated fibers.

11. The method of claim 10, wherein the one or more fibers is (are) glass fiber(s).

12. The method of claim 10 or 11, wherein the chemical composition is applied by spraying.

13. The method of any of claims 10 to 12, wherein the treated fibers are dried.

14. A method for forming a non-woven mat of chopped fibers by dispersing fibers treated with a chemical composition prepared according to the process of any of claims 1-6 and having thereon the water content reduced residue of said composition in water, forming the nonwoven mat by a wet laid process, removing any excess of water and drying the mat.

## Patentansprüche (Patentansprüche für folgende(n) Vertragsstaat(en): BE, CH, DE, FR, GB, IT, LI, NL)

1. Chemische Zusammensetzung zur Herstellung chemisch behandelter Fasern, die einen aushärtbaren Film haben, der in seinem ungehärteten Zustand wasserlöslich ist, abgelagert auf wesentlichen Anteilen der Oberfläche einer oder mehrere Fasern, wobei die Zusammensetzung folgendes umfaßt:
a) ein wasserlösliches, filmbildendes Polymer, ausgewählt aus der Gruppe bestehend aus einem Poly(vinylalkohol) und einer Poly(hydroxyalkylzellulose), wobei der Poly(vinylalkohol) ausgewählt ist aus der Gruppe beste hend aus einem Poly(vinylalkohol) mit einem gewichtsmittleren Molekulargewicht von 25.000 bis 35.000, einem Poly(vinylalkohol) mit einem zahlenmittleren Molekulargewicht von 77.000 bis 79.000 und einem Poly(vinylalkohol) mit einem gewichtsmittleren Molekulargewicht von bis zu 30.000, wobei das filmbildende Polymer einen Standinger-Index unter 150 Zentipoise hat und in einer effektiven filmbildenden Menge vorhanden ist,
b) ein organofunktionelles Trialkoxysilan, das hydrolysiert, teilweise hydrolysiert oder nicht hydrolysiert ist, und Mischungen daraus, worin die Organofunktionalität harzverträglich und im wesentlichen frei von primärer Aminmonoorganofunktionalität ist und worin das Silan in all seinen Formen 0,4 bis 20 Gew.-% der Festsubstanz der Zusammensetzung ausmacht,
c) ein kationisches Fasergleitmittel in einer Menge von 0,1 bis 15 Gew.-% der Festsubstanz der Zusammensetzung,
d) ein Epichlorhydrinpolyaminreaktionsprodukt, vorhanden in einer Menge von 0,4 bis 15 Gew.-% der Festsubstanz der chemischen Zusammensetzung, und
d) Wasser, vorhanden in einer Menge, um der Zusammensetzung eine Gesamtfestsubstanz von 1 bis 25 Gew.-% und eine Viskosität von 0,6 bis 150 Zentipoise zur Anwendung der Zusammensetzung auf Fasern zu geben, und worin die Zusammensetzung im wesentlichen frei ist von: a) Acrylausflockungsmitteln, b) polymerfilmbildenden Polymeren auf Latexbasis, die bei Verdampfung oder Reaktion bei Umgebungstemperaturen das Aushärten des Films auf den Fasern zu einem wasserunlöslichen Film bewirken, und c) Poly(oxyethylen)homopolymeren.

2. Chemische Zusammensetzung nach Anspruch 1, in der das filmbildende Polymer (a) in einer Menge von bis zu 98 Gew.-% der nichtwäßrigen Festsubstanz der chemischen Zusammensetzung vorhanden ist.

3. Chemische Zusammensetzung nach Anspruch 1, in der das kationische Gleitmittel (c) ausgewählt ist aus der Gruppe bestehend aus aliphatischem Alkyl-2-imidazolin, Aminoxiden, Polyoxyalkylenalkylaminen, 1-(2-Hydroxyalkyl)-2-alkyl-2-imidazolin, 2-Hydroxyalkyl-2-imidazolin, Alkylimidazolin-Derivaten, einschließlich Verbindungen der Klasse der n-Alkyl-N-amidoalkylimidazoline, die gebildet werden können, indem Fettsäuren oder Carbonsäuren veranlaßt werden, mit Polyalkylenpolyaminen unter Bedingungen zu reagieren, die einen Ringschluß bewirken, N,N,N',N'tetrakis-substituierten Ethylendiamin-Derivaten, von Kollophonium abgeleiteten Aminen, polyoxyethylenalizyklischen Aminen, Polyoxyethylendihydroabietylaminen und Reaktionsprodukten von Carbon- oder Fettsäuren mit Di- oder Polyamindialkylen oder Polyaminen und polyalkoxylierten Derivaten davon.

4. Chemische Zusammensetzung nach Anspruch 1, in der der organofunktionelle Silan-Haftvermittler (b) ausgewählt ist aus der Gruppe bestehend aus selbstschmierendem alkoxyliertem gamma-Amintrialkoxysilan, Polyaminoorganosilan, mercaptofunktionellem Organosilan, ureidfunktionellem Organosilan, vinylfunktionellem Organosilan und Mischungen daraus.

5. Chemische Zusammensetzung nach Anspruch 1, in der Wasser in einer Menge vorhanden ist, um eine Viskosität der Zusammensetzung im Bereich von 0,6 bis 50 Zentipoise bei 60°C oder weniger zu ergeben.

6. Chemische Zusammensetzung nach Anspruch 1, in der der Poly(vinylalkohol) aus Vinylestern hydrolysiert ist, die aus der Gruppe bestehend aus Vinylacetat, Vinylpropionat und Vinylformiat ausgewählt sind.

7. Glasfasern, die auf sich den hinsichtlich des Wassergehalts reduzierten Rückstand einer wäßrigen chemischen Zusammensetzung nach einem der Ansprüche 1-6 aufweisen als einen ungehärteten, wasserlöslichen Film, der in einer auf LOI basierenden Menge von 0,001 bis 1,5 Gew.-% der behandelten Glasfasern vorhanden ist.

8. Glasfasern nach Anspruch 7, bei denen die Fasern Schnittfasern mit einer Länge von 1,59 mm (1/16 Zoll) bis 76,2 mm (3 Zoll) sind.

9. Nichtgewebte, plattenartige Glasfasermatten, hergestellt aus Glasfasern entsprechend den Ansprüchen 7 oder 8.

10. Verfahren zur Verbesserung der Dispergierbarkeit von Fasern in einem wäßrigen Medium, indem (a) eine chemische Zusammensetzung nach einem der Ansprüche 1-6 auf wesentliche Anteile der Oberfläche einer oder mehrerer Fasern aufgetragen wird, was eine oder mehrere chemisch behandelte Fasern ergibt.

11. Verfahren nach Anspruch 10, bei dem die eine oder mehrere Fasern eine Glasfaser (Glasfasern) ist (sind).

12. Verfahren nach Anspruch 10 oder 11, bei dem die chemische Zusammensetzung durch Sprühen aufgetragen wird.

13. Verfahren nach einem der Ansprüche 10 bis 12, bei dem die behandelten Fasern getrocknet werden.

14. Verfahren zur Bildung einer nichtgewebten Matte von Schnittfasern, indem Fasern, die mit einer chemischen Zusammensetzung nach einem der Ansprüche 1-6 behandelt sind und auf sich den hinsichtlich des Wassergehalts reduzierten Rückstand der besagten Zusammensetzung aufweisen, in Wasser dispergiert werden, die nichtgewebte Matte durch ein Naßablagerungsverfahren gebildet wird, jeder Überschuß an Wasser entfernt wird und die hatte getrocknet wird.

## Patentansprüche (Patentansprüche für folgende(n) Vertragsstaat(en): ES)

1. Verfahren zur Herstellung einer chemischen Zusammensetzung zur Herstellung chemisch behandelter Fasern, die einen aushärtbaren Film haben, der in seinem ungehärteten Zustand wasserlöslich ist, abgelagert auf wesentlichen Anteilen der Oberfläche einer oder mehrere Fasern, wobei die Zusammensetzung folgendes umfaßt:
a) ein wasserlösliches, filmbildendes Polymer, ausgewählt aus der Gruppe bestehend aus einem Poly(vinylalkohol) und einer Poly(hydroxyalkylzellulose), wobei der Poly(vinylalkohol) ausgewählt ist aus der Gruppe bestehend aus einem Poly(vinylalkohol) mit einem gewichtsmittleren Molekulargewicht von 25.000 bis 35.000, einem Poly(vinylalkohol) mit einem zahlenmittleren Molekulargewicht von 77.000 bis 79.000 und einem Poly(vinylalkohol) mit einem gewichtsmittleren Molekulargewicht von bis zu 30.000, wobei das filmbildende Polymer einen Standinger-Index unter 150 Zentipoise hat und in einer effektiven filmbildenden Menge vorhanden ist,
b) ein organofunktionelles Trialkoxysilan, das hydrolysiert, teilweise hydrolysiert oder nicht hydrolysiert ist, und Mischungen daraus, worin die Organofunktionalität harzverträglich und im wesentlichen frei von primärer Aminmonoorganofunktionalität ist und worin das Silan in all seinen Formen 0,4 bis 20 Gew.-% der Festsubstanz der Zusammensetzung ausmacht,
c) ein kationisches Fasergleitmittel in einer Menge von 0,1 bis 15 Gew.-% der Festsubstanz der Zusammensetzung,
d) ein Epichlorhydrinpolyaminreaktionsprodukt, vorhanden in einer Menge von 0,4 bis 15 Gew.-% der Festsubstanz der chemischen Zusammensetzung, und
d) Wasser, vorhanden in einer Menge, um der Zusammensetzung eine Gesamtfestsubstanz von 1 bis 25 Gew.-% und eine Viskosität von 0,6 bis 150 Zentipoise zur Anwendung der Zusammensetzung auf Fasern zu geben, und worin die Zusammensetzung im wesentlichen frei ist von: a) Acrylausflockungsmitteln, b) polymerfilmbildenden Polymeren auf Latexbasis, die bei Verdampfung oder Reaktion bei Umgebungstemperaturen das Aushärten des Films auf den Fasern zu einem wasserunlöslichen Film bewirken, und c) Poly(oxyethylen)homopolymeren.

2. Verfahren nach Anspruch 1, in dem das filmbildende Polymer (a) in einer Menge von bis zu 98 Gew.-% der nichtwäßrigen Festsubstanz der chemischen Zusammensetzung vorhanden ist.

3. Verfahren nach Anspruch 1, in dem das kationische Gleitmittel (c) ausgewählt ist aus der Gruppe bestehend aus aliphatischem Alkyl-2-imidazolin, Aminoxiden, Polyoxyalkylenalkylaminen, 1-(2-Hydroxyalkyl)-2-alkyl-2-imidazolin, 2-Hydroxyalkyl-2-imidazolin, Alkylimidazolin-Derivaten, einschließlich Verbindungen der Klasse der n-Alkyl-Namidoalkylimidazoline, die gebildet werden können, indem Fettsäuren oder Carbonsäuren veranlaßt werden, mit Polyalkylenpolyaminen unter Bedingungen zu reagieren, die einen Ringschluß bewirken, N,N,N',N'tetrakis-substituierten Ethylendiamin-Derivaten, von Kollophonium abgeleiteten Aminen, polyoxyethylenalizyklischen Aminen, Polyoxyethylendihydroabietylaminen und Reaktionsprodukten von Carbon- oder Fettsäuren mit Di- oder Polyamindialkylen oder Polyaminen und polyalkoxylierten Derivaten davon.

4. Verfahren nach Anspruch 1, in dem der organofunktionelle Silan-Haftvermittler (b) ausgewählt ist aus der Gruppe bestehend aus selbstschmierendem alkoxyliertem gamma-Amintrialkoxysilan, Polyaminoorganosilan, mercaptofunktionellem Organosilan, ureidfunktionellem Organosilan, vinylfunktionellem Organosilan und Mischungen daraus.

5. Verfahren nach Anspruch 1, in dem Wasser in einer Menge vorhanden ist, um eine Viskosität der Zusammensetzung im Bereich von 0,6 bis 50 Zentipoise bei 60°C oder weniger zu ergeben.

6. Verfahren nach Anspruch 1, in dem der Poly(vinylalkohol) aus Vinylestern hydrolysiert ist, die aus der Gruppe bestehend aus Vinylacetat, Vinylpropionat und Vinylformiat ausgewählt sind.

7. Glasfasern, die auf sich den hinsichtlich des Wassergehalts reduzierten Rückstand einer wäßrigen chemischen Zusammensetzung nach einem der Ansprüche 1-6 aufweisen als einen ungehärteten, wasserlöslichen Film, der in einer auf LOI basierenden Menge von 0,001 bis 1,5 Gew.-% der behandelten Glasfasern vorhanden ist.

8. Glasfasern nach Anspruch 7, bei denen die Fasern Schnittfasern mit einer Länge von 1,59 mm (1/16 Zoll) bis 76,2 mm (3 Zoll) sind.

9. Nichtgewebte, plattenartige Glasfasermatten, hergestellt aus Glasfasern entsprechend den Ansprüchen 7 oder 8.

10. Verfahren zur Verbesserung der Dispergierbarkeit von Fasern in einem wäßrigen Medium, indem (a) eine chemische Zusammensetzung nach einem der Ansprüche 1-6 auf wesentliche Anteile der Oberfläche einer oder mehrerer Fasern aufgetragen wird, was eine oder mehrere chemisch behandelte Fasern ergibt.

11. Verfahren nach Anspruch 10, bei dem die eine oder mehrere Fasern eine Glasfaser (Glasfasern) ist (sind).

12. Verfahren nach Anspruch 10 oder 11, bei dem die chemische Zusammensetzung durch Sprühen aufgetragen wird.

13. Verfahren nach einem der Ansprüche 10 bis 12, bei dem die behandelten Fasern getrocknet werden.

14. Verfahren zur Bildung einer nichtgewebten Matte von Schnittfasern, indem Fasern, die mit einer chemischen Zusammensetzung nach einem der Ansprüche 1-6 behandelt sind und auf sich den hinsichtlich des Wassergehalts reduzierten Rückstand der besagten Zusammensetzung aufweisen, in Wasser dispergiert werden, die nichtgewebte Matte durch ein Naßablagerungsverfahren gebildet wird, jeder Überschuß an Wasser entfernt wird und die Matte getrocknet wird.

## Revendications (Revendications pour l'(les) Etat(s) contractant(s) suivant(s): BE, CH, DE, FR, GB, IT, LI, NL)

1. Composition chimique destinée à la production de fibres chimiquement traitées, comportant un film durcissable qui est soluble dans l'eau dans son état non durci, déposé sur des parties substantielles de la surface d'une ou plusieurs fibres, caractérisée en ce qu'elle comprend :
a) un polymère filmogène soluble dans l'eau, choisi dans le groupe formé par un poly(alcool vinylique) et une poly(hydroxyalkylcellulose), le poly(alcool vinylique) étant choisi dans le groupe constitué d'un poly(alcool vinylique) possédant un poids moléculaire moyen en poids de 25 000 à 35 000, un poly(alcool vinylique) possédant un poids moléculaire moyen en nombre de 77 000 à 79 000 et un poly(alcool vinylique) possédant un poids moléculaire moyen en poids allant jusqu'à 30 000, le polymère filmogène possédant une viscosité intrinsèque inférieure à 150 centipoises et étant présent en une proportion filmogène efficace;
b) un trialcoxysilane organofonctionnel, qui est hydrolysé, partiellement hydrolysé ou non hydrolysé et les mélanges de tels trialcoxysilanes, où l'organofonctionnalité est compatible avec les résines et sensiblement dépourvue de mono-organofonctionnalité du type amine primaire et où le silane sous ses formes constitue de 0,4 à 20% en poids des solides de la composition;
c) un lubrifiant pour fibres cationique en une proportion qui varie de 0,1 à 15% en poids des solides de la composition;
d) un produit de réaction d'épichlorhydrine et de polyamine, présent en une proportion de 0,4 à 15% en poids des solides de la composition chimique, et
e) de l'eau présente en une proportion telle qu'elle confère à la composition une teneur totale en solides de 1 à 25% en poids et une viscosité de 0,6 à 150 centipoises en vue de l'application de la composition à des fibres et où la composition est essentiellement dépourvue : a) d'agents de floculation acrylique, b) de polymères filmogènes polymériques à base de latex, qui provoquent, par évaporation ou réaction aux températures ambiantes, le durcissement du film sur les fibres en un film insoluble dans l'eau, et c) des homopolymères de poly(oxyéthylène).

2. Composition chimique suivant la revendication 1, caractérisée en ce que le polymère filmogène (a) est présent en une proportion allant jusqu'à 98% en poids des solides non aqueux de la composition chimique.

3. Composition chimique suivant la revendication 1, caractérisée en ce que le lubrifiant cationique (c) est choisi dans le groupe constitué des alkyl-2-imidazolines aliphatiques; des oxydes d'amines; des polyoxyalkylènealkylamines; des 1-(2-hydroxyalkyl)-2-alkyl-2-imidazolines; des 2-hydroxyalkyl-2-imidazolines; des dérivés du type alkylimidazolines comprenant des composés de la classe des n-alkyl-N-amidoalkylimidazolines, que l'on peut former en amenant des acides gras ou des acides carboxyliques à réagir avec des polyalkylènepolyamines dans des conditions qui provoquent une fermeture de cycle; des dérivés du type N,N,N',N'-tétrakis-éthylènediamine; des amines dérivées de la colophane; des polyoxyéthylèneamines alicycliques; des polyoxyéthylènedihydroabiétylamines, et des produits de réaction d'acides carboxyliques ou d'acides gras avec des di- ou polyamines dialkyléniques ou des dérivés polyamines et leurs dérivés polyalcoxylés.

4. Composition chimique suivant la revendication 1, caractérisée en ce que l'agent de couplage du type silane organofonctionnel (6) est choisi dans le groupe formé par les gamma-aminotrialcoxysilanes alcoxylés lubrifiés, les polyamino-organosilanes, les organosilanes mercaptofonctionnels, les organosilanes uréidofonctionnels, les organosilanes vinylfonctionnels et leurs mélanges.

5. Composition chimique suivant la revendication 1, caractérisée en ce que de l'eau est présente en une proportion telle qu'elle confère une viscosité à la composition qui varie de 0,6 à 50 centipoises à 60°C ou moins encore.

6. Composition chimique suivant la revendication 1, caractérisée en ce que le poly(alcool vinylique) est hydrolysé à partir d'esters vinyliques choisis dans le groupe formé par l'acétate de vinyle, le propionate de vinyle et le formiate de vinyle.

7. Fibres de verre comportant, sur elles, le résidu à teneur en eau réduite d'une composition chimique aqueuse selon n'importe laquelle des revendications 1 à 6, à titre de film soluble dans l'eau et non durci, en une proportion selon la PAF, qui varie de 0,001 à 1,5% en poids des fibres de verre traitées.

8. Fibres de verre suivant la revendication 7, caractérisées en ce que se sont des fibres hachées possédant une longueur de 1,59 mm (1/19 pouce) à 76,2 mm (3 pouces).

9. Nappe de fibres de verre analogue à une feuille non tissée, préparée au départ des fibres de verre selon la revendication 7 ou 8.

10. Procédé pour améliorer la dispersibilité des fibres dans un milieu aqueux, (a) par application à des parties substantielles de la surface d'une ou plusieurs fibres, d'une composition chimique suivant l'une quelconque des revendications 1 à 6, donnant naissance à une ou plusieurs fibres chimiquement traitées.

11. Procédé suivant la revendication 10, caractérisé en ce que la ou les fibres sont une ou des fibres de verre.

12. Procédé suivant la revendication 10 ou 11, caractérisé en ce que l'on applique la composition chimique par pulvérisation.

13. Procédé suivant l'une quelconque des revendications 10 à 12, caractérisé en ce que l'on sèche les fibres traitées.

14. Procédé pour former une nappe non tissée de fibres hachées en dispersant des fibres traitées par une composition chimique suivant l'une quelconque des revendications 1 à 6 et comportant, sur elles, le résidu à teneur en eau réduite de ladite composition dans de l'eau, en formant la nappe non tissée par un processus de déposition à l'état humide, en éliminant l'excès d'eau et en séchant la nappe.

## Revendications (Revendications pour l'(les) Etat(s) contractant(s) suivant(s): ES)

1. Procédé de préparation d'une composition chimique destinée à la production de fibres chimiquement traitées, comportant un film durcissable qui est soluble dans l'eau dans son état non durci, déposé sur des parties substantielles de la surface d'une ou plusieurs fibres, caractérisé en ce que la composition comprend :
a) un polymère filmogène soluble dans l'eau, choisi dans le groupe formé par un poly(alcool vinylique) et une poly(hydroxyalkylcellulose), le poly(alcool vinylique) étant choisi dans le groupe constitué d'un poly(alcool vinylique) possédant un poids moléculaire moyen en poids de 25 000 à 35 000, un poly(alcool vinylique) possédant un poids moléculaire moyen en nombre de 77 000 à 79 000 et un poly(alcool vinylique) possédant un poids moléculaire moyen en poids allant jusqu'à 30 000, le polymère filmogène possédant une viscosité intrinsèque inférieure à 150 centipoises et étant présent en une proportion filmogène efficace;
b) un trialcoxysilane organofonctionnel, qui est hydrolysé, partiellement hydrolysé ou non hydrolysé et les mélanges de tels trialcoxysilanes, où l'organofonctionnalité est compatible avec les résines et sensiblement dépourvue de mono-organofonctionnalité du type amine primaire et où le silane sous ses formes constitue de 0,4 à 20% en poids des solides de la composition;
c) un lubrifiant pour fibres cationique en une proportion qui varie de 0,1 à 15% en poids des solides de la composition;
d) un produit de réaction d'épichlorhydrine et de polyamine, présent en une proportion de 0,4 à 15% en poids des solides de la composition chimique, et
e) de l'eau présente en une proportion telle qu'elle confère à la composition une teneur totale en solides de 1 à 25% en poids et une viscosité de 0,6 à 150 centipoises en vue de l'application de la composition à des fibres et où la composition est essentiellement dépourvue : a) d'agents de floculation acrylique, b) de polymères filmogènes polymériques à base de latex, qui provoquent, par évaporation ou réaction aux températures ambiantes, le durcissement du film sur les fibres en un film insoluble dans l'eau, et c) des homopolymères de poly(oxyéthylène).

2. Procédé suivant la revendication 1, caractérisé en ce que le polymère filmogène (a) est présent en une proportion allant jusqu'à 98% en poids des solides non aqueux de la composition chimique.

3. Procédé suivant la revendication 1, caractérisé en ce que le lubrifiant cationique (c) est choisi dans le groupe constitué des alkyl-2-imidazolines aliphatiques; des oxydes d'amines; des polyoxyalkylènealkylamines; des 1-(2-hydroxyalkyl)-2-alkyl-2-imidazolines; des 2-hydroxyalkyl-2-imidazolines; des dérivés du type alkylimidazolines comprenant des composés de la classe des n-alkyl-N-amidoalkylimidazolines, que l'on peut former en amenant des acides gras ou des acides carboxyliques à réagir avec des polyalkylènepolyamines dans des conditions qui provoquent une fermeture de cycle; des dérivés du type N,N,N',N'-tétrakis-éthylènediamine; des amines dérivées de la colophane; des polyoxyéthylèneamines alicycliques; des polyoxyéthylènedihydroabiétylamines, et des produits de réaction d'acides carboxyliques ou d'acides gras avec des di- ou polyamines dialkyléniques ou des dérivés polyamines et leurs dérivés polyalcoxylés.

4. Procédé suivant la revendication 1, caractérisé en ce que l'agent de couplage du type silane organofonctionnel (6) est choisi dans le groupe formé par les gamma-aminotrialcoxysilanes alcoxylés lubrifiés, les polyamino-organosilanes, les organosilanes mercaptofonctionnels, les organosilanes uréidofonctionnels, les organosilanes vinylfonctionnels et leurs mélanges.

5. Procédé suivant la revendication 1, caractérisé en ce que de l'eau est présente en une proportion telle qu'elle confère une viscosité à la composition qui varie de 0,6 à 50 centipoises à 60°C ou moins encore.

6. Procédé suivant la revendication 1, caractérisé en ce que le poly(alcool vinylique) est hydrolysé à partir d'esters vinyliques choisis dans le groupe formé par l'acétate de vinyle, le propionate de vinyle et le formiate de vinyle.

7. Fibres de verre comportant, sur elles, le résidu à teneur en eau réduite d'une composition chimique aqueuse préparée par la procédé selon n'importe laquelle des revendications 1 à 6, à titre de film soluble dans l'eau et non durci, en une proportion selon la PAF, qui varie de 0,001 à 1,5% en poids des fibres de verre traitées.

8. Fibres de verre suivant la revendication 7, caractérisées en ce que se sont des fibres hachées possédant une longueur de 1,59 mm (1/19 pouce) à 76,2 mm (3 pouces).

9. Nappe de fibres de verre analogue à une feuille non tissée, préparée au départ des fibres de verre selon la revendication 7 ou 8.

10. Procédé pour améliorer la dispersibilité des fibres dans un milieu aqueux, (a) par application à des parties substantielles de la surface d'une ou plusieurs fibres, d'une composition chimique préparée par le procédé suivant l'une quelconque des revendications 1 à 6, donnant naissance à une ou plusieurs fibres chimiquement traitées.

11. Procédé suivant la revendication 10, caractérisé en ce que la ou les fibres sont une ou des fibres de verre.

12. Procédé suivant la revendication 10 ou 11, caractérisé en ce que l'on applique la composition chimique par pulvérisation.

13. Procédé suivant l'une quelconque des revendications 10 à 12, caractérisé en ce que l'on sèche les fibres traitées.

14. Procédé pour former une nappe non tissée de fibres hachées en dispersant des fibres traitées par une composition chimique préparée par le procédé suivant l'une quelconque des revendications 1 à 6 et comportant, sur elles, le résidu à teneur en eau réduite de ladite composition dans de l'eau, en formant la nappe non tissée par un processus de déposition à l'état humide, en éliminant l'excès d'eau et en séchant la nappe.
